# EUROPÄISCHE PATENTSCHRIFT

(11) **EP 0 441 169 B1**
(45) Veröffentlichungstag und Bekanntmachung des Hinweises auf die Patenterteilung: **17.08.1994**
(21) Anmeldenummer: 91100771.4
(22) Anmeldetag: 22.01.1991
(51) Int. Cl.: B09B 3/00, E02D 3/00, A62D 3/00, B09B 1/00

(54) **Verfahren und Vorrichtung zur in-situ-Sanierung kontaminierter Bereiche**
Method and device for in situ remediation of contaminated areas
Procédé et dispositif d'assainissement in situ de zones contaminées

(30) Priorität: 05.02.1990 DE 4003362
(43) Veröffentlichungstag der Anmeldung: 14.08.1991
(73) Patentinhaber: KELLER GRUNDBAU GmbH, D-63067 Offenbach (DE)
(72) Erfinder: Sondermann, Wolfgang, Dr. Ing., W-6057 Dietzenbach (DE)
(74) Vertreter: Zeitler, Giselher, Dipl.-Ing.

(56) Entgegenhaltungen:
- EP-A- 0 170 862
- WO-A-86/01439
- DE-A- 3 720 833
- DE-C- 3 811 714
- PATENT ABSTRACTS OF JAPAN, vol. 7, no. 279 (M-262)(1424) 13. Dezember 1983; & JP-A-58 156619 (Kobe Seikosho K.K.) 17. September 1983

## Beschreibung

Die Erfindung betrifft ein Verfahren zur in-situ-Sanierung kontaminierter Bereiche wie natürliche Böden, künstliche Auffüllungen, Deponien, Altlasten und dgl. gemäß dem Oberbegriff des Anspruchs 1. Die Erfindung betrifft außerdem eine zur Durchführung dieses Verfahrens vorgesehene Vorrichtung gemäß dem Oberbegriff des Anspruchs 9.

Es sind schon verschiedene Verfahren bekannt, bei denen das Einbringen der Mikroorganismen und/oder Nährstoffe bzw. eine diese Materialien enthaltende Suspension in einen kontaminierten Boden auf unterschiedliche Art und Weise erfolgt, um die im Boden enthaltenen Schadstoffe mikrobiologisch auf natürlichem Weg abzubauen, d.h. also insbesondere die den größten Anteil der Schadstoffe bildenden Kohlenwasserstoffe in Kohlendioxid und Wasser zu zersetzen.

So erfolgt bei einem bekannten Verfahren zum mikrobiellen Abbau von Kontaminationen (DE-C-36 21 313) das Einbringen der Mikroorganismen und/oder Nährstoffe in den kontaminierten Boden dadurch, daß man die betreffende Suspension auf die Bodenoberfläche aufbringt und dann in diesen versickern läßt. Ein derartiges Verfahren eignet sich jedoch nicht für eine vollständig gleichmäßige Verteilung der in den kontaminierten Boden einzubringenden Mikroorganismen und Nährstoffe, da die Wirksamkeit sowie die Reichweite der Versikkerung von der jeweiligen Zusammensetzung, dem Porenvolumen und der Durchlässigkeit des kontaminierten Boden entscheidend bestimmt bzw. beeinflußt wird.

Um diese Nachteile zu vermeiden, ist es weiterhin bekannt, das zum Zweck der Dekontaminierung verseuchter Bodenschichten erfolgende Einbringen von Mikroorganismen und dgl. entweder mittels in den Boden niedergebrachter Versorgungsbohrungen zur Schaffung von Nestern aus Mikroorganismen durchzuführen (EP-A-0 170 862) oder aber mittels örtlicher Impfvorgänge (DE-C-36 01 979) bzw. mittels gezielter Injektionen (DE-C-38 11 714) zu bewerkstelligen, um dadurch den kontaminierten Boden gezielter als beim eingangs beschriebenen Verfahren mit den Mikroorganismen und Nährstoffen zu versetzen. Jedoch erweist sich auch bei diesen bekannten Verfahren als nachteilig, daß aufgrund der stets vorhandenen inhomogenen Verteilung der Schadstoffe gegebene Konzentrationsspitzen der Kontamination nicht zuverlässig abgebaut werden können und daß nach wie vor eine die Wirksamkeit des Verfahrens stark beeinträchtigende Abhängigkeit von der jeweils bestehenden Bodenstruktur vorliegt.

In dem Versuch, diese Abhängigkeit von der jeweiligen Bodenstruktur zu vermeiden, ist bei einem weiteren bekannten Verfahren zur biologischen Reinigung von Erdböden vorgesehen (DE-A-38 11 856), den kontaminierten Erdboden durch Sprengung mittels in den Boden eingebrachten Sprengstoffs aufzulockern und sodann anschließend die Nährstoffe bzw. die die Schadstoffe abbauenden Mikroorganismen in den Erdboden einzubringen. Auch bei diesem Verfahren ist keine homogene Verteilung der Schadstoffe erreichbar, so daß Konzentrationsspitzen im Boden nicht abgebaut werden könnnen.

Dies beruht im wesentlichen darauf, daß der verunreinigte Boden in der Regel inhomogen aufgebaut ist. Es ist daher schwierig, den direkten Kontakt zwischen Nährstoff, Sauerstoff, Mikroorganismus und Schadstoff an jeder beliebigen Stelle im Verunreinigungsbereich zu erreichen bzw. zuverlässig und wirksam herzustellen. Probleme entstehen außerdem durch die unterschiedliche Konzentration der Verunreinigungen sowie durch die heterogene Zusammensetzung der organischen Schadstoffe im Boden, wobei diese Probleme weder durch vorherige Sprengung des kontaminierten Bodens noch durch örtliches Injizieren der Nährstoffe, Mikroorganismen und dgl. gelöst werden können.

Insgesamt läßt sich daher feststellen, daß diesen bekannten Verfahren die Nachteile dahingehend eigen sind,
- daß keine homogene und gleichzeitig wirksame Verteilung der Mikroorganismen im Boden erreichbar ist, da die Bodenzusammensetzung, das Porenvolumen und die Durchlässigkeit des Bodens die Reichweite der eingebrachten Mikroorganismen bestimmen,
- daß keine vorherige homogene Verteilung der Schadstoffe erzielbar ist, so daß Konzentrationsspitzen nicht abgebaut werden können,
- daß keine optimale Belüftung und Bewässerung des Bodens erzielt wird, sondern eine unerwünschte Abhängigkeit von der jeweils bestehenden Bodenstruktur vorliegt, und
- daß keine freie Beweglichkeit der Mikroorganismen im Boden gewährleistet ist, da diese freie Beweglichkeit durch wasserundurchlässige Bodenschichten behindert sein kann.

Weiterhin ist aus der WO-A-86 01 439 ein Verfahren der im Oberbegriff des Anspruchs 1 genannten Art bekannt, bei dem ein Bohr-Injektionsgerät zur mechanischen Aufbereitung des Bodens in den zu behandelnden Bodenbereich abgelassen wird. Während des Bohrvorgangs oder beim Zurückziehen des Bohr-Injektionsgeräts werden dabei chemische Stoffe in den zu sanierenden Bodenbereich injiziert, um eine feste, weitgehend unlösliche Masse zu erhalten, aus der toxisches oder radioaktives Material weder in den umgebenden Bereich bzw. das Grundwasser durchsickern noch in die Atmosphäre ausgasen kann. Alternativ zu den angesprochenen Chemikalien können auch Mikroorganismen und/oder eine Nährlösung in den Boden eingebracht werden.

Auch mit diesem bekannten Verfahren ist es jedoch nicht immer möglich, Mikroorganismen und Nährstoffe in der gewünschten Weise gleichförmig und wirkungsvoll in den kontaminierten Bereich einzubringen.

Der Erfindung liegt daher die Aufgabe zugrunde, ein Verfahren gemäß dem Oberbegriff des Anspruchs 1 derart auszugestalten, daß die Mikroorganismen und Nährstoffe möglichst gleichförmig und wirkungsvoll in den kontaminierten Bereich eingebracht werden können und gleichzeitig gewährleistet ist, daß ein optimaler Abbau der Schadstoffe erfolgt. Außerdem soll eine wirkungsvolle Vorrichtung zur Durchführung dieses Verfahrens geschaffen werden.

Das Verfahren gemäß der Erfindung löst diese Aufgabe mit den Merkmalen des Anspruchs 1. Vorteilhafte Ausgestaltungen hiervon sind in den Ansprüchen 2 - 8 angegeben.

Die zur Durchführung dieses Verfahrens geschaffene Vorrichtung gemäß der Erfindung ist durch die Merkmale des Anspruchs 9 gekennzeichnet. Zweckmäßige Ausgestaltungen hiervon sind in den weiteren Ansprüchen beschrieben.

Bei dem erfindungsgemäßen Verfahren wird während der mechanischen Aufbereitung des kontaminierten Bereiches, die vor dem Einbringen der die Mikroorganismen und/oder Nährstoffe enthaltenden Suspension in den kontaminierten Bereich erfolgt, Wasser zur Anpassung der Temperatur und des pH-Wertes des Bereichs zugegeben.

Durch die Zugabe von Wasser während der mechanischen Aufbereitung des Bodens wird auf einfache Weise eine wesentlich gleichförmigere und feinkörnigere Bodenstruktur erhalten, in die die Suspension mit den Mikroorganismen und/oder den Nährstoffen eingebracht werden kann. Hieraus folgt eine gleichförmigere Verteilung der Suspension innerhalb des mechanisch aufbereiteten Bodens, was einen wirksameren Abbau der Schadstoffe zur Folge hat. Von besonderem Vorteil ist dabei, daß mittels des Wassers die Temperatur und der pH-Wert des Bodens gezielt in Richtung einer optimalen Wirksamkeit der Mikroorganismen beeinflußt werden können.

Vorteilhafterweise wird als zuzugebendes Wasser erwärmtes Wasser verwendet, wodurch das Wachstum der Mikroorganismen beschleunigt werden kann.

Die mechanische homogene Aufbereitung des kontaminierten Bereichs kann in dessen vertikaler und/oder horizontaler Erstreckung durchgeführt werden. In jedem Fall wird hierdurch der kontaminierte Bereich od.dgl. homogener als bisher aufbereitet, und es werden evtl. vorhandene undurchlässige Bereiche der benachbarten Bodenumgebung angepaßt. Gleichzeitig wird durch den intensiven mechanischen Mischvorgang eine homogene Verteilung der Kontamination in den verschiedenen Tiefenbereichen des Bodens erzeugt, was die Voraussetzungen für einen optimalen mikrobiologischen Abbau schafft.

Wenn der kontaminierte Bereich in der beschriebenen Weise vollkommen homogen aufbereitet ist, erfolgt die Suspensionszugabe, wobei die zugegebene Suspensionsmenge nicht nur an die unterschiedliche Konzentration der Kontamination angepaßt, sondern die Zugabe auch in unterschiedlichen Bereichstiefen durchgeführt werden kann.

Die zugegebene Suspension enthält nicht nur die zum mikrobiologischen Abbau der Schadstoffe erforderlichen Mikroorganismen, Nährstoffe und dgl., sondern kann auch zum Zweck der Umwandlung bestimmter spezieller Schadstoffe mit geeigneten Chemikalien versetzt sein. Diese können gasförmig, flüssig oder fest sein, wobei beisp. Ozon und/oder Perhydrol zur Anwendung gelangen kann. Außerdem oder stattdessen kann die Suspension auch Verfestigungsmittel, beisp. auf Zementbasis, enthalten, um die Kontamination zu fixieren, so daß im Fall einer Wasserbewegung ein unerwünschter Abtransport der Kontamination zuverlässig verhindert ist.

Falls erwünscht, können die mechanische homogene Aufbereitung des kontaminierten Bereichs und die Zugabe der Suspension mehr oder weniger gleichzeitig erfolgen. Gemäß einer bevorzugten Ausführungsform werden diese beiden Verfahrensschritte jedoch in zeitlich aufeinander folgenden Arbeitsgängen durchgeführt. Hierdurch wird mit Sicherheit gewährleistet, daß vor dem Einbringen der Suspension der kontaminierte Bereich vollkommen homogen aufbereitet, d.h. gelöst, gelockert, geschnitten und intensiv durchmischt ist.

Falls aufgrund der Struktur des kontaminierten Bereichs erwünscht oder erforderlich, kann die mechanische Aufbereitung des Bereichs mehrmals wiederholt werden.

Das erfindungsgemäße Verfahren weist damit den Vorteil auf, daß aufgrund der mechanischen Aufbereitung des kontaminierten Bereichs und der Wasserzugabe einerseits eine besonders homogene Verteilung der Schadstoffe gewährleistet ist, so daß Konzentrationsspitzen abgebaut werden können. Andererseits wird eine homogene Verteilung der eingebrachten Mikroorganismen erreicht, ohne daß eine unerwünschte Abhängigkeit von der Bodenzusammensetzung, dem Porenvolumen, der Durchlässigkeit usw. vorliegt. Gleichzeitig ist aufgrund des homogen aufbereiteten Bodens eine optimale Belüftung einschließlich Bewässerung - unabhängig von der früher vorliegenden Bereichsstruktur - sichergestellt, so daß sich die eingebrachten Mikroorganismen im kontaminierten Bereich frei bewegen und ihre Wirksamkeit gleichmäßig entfalten können, ohne daß diese Wirksamkeit beispielsweise durch wasserundurchlässige Schichten beeinträchtigt ist.

Die zur Durchführung dieses Verfahrens vorgesehene Vorrichtung gemäß der Erfindung weist ein Schneid- und Rührwerkzeug mit einem etwa auf mittiger Höhe seiner Längserstreckung angeordneten Mischflügel auf, der mit Austrittsöffnungen zum Ausbringen der Suspension versehen ist. Wenn der kontaminierte Bereich durch das Schneid- und Rührwerkzeug des Aufbereitungsgeräts in der erwünschten Weise bearbeitet ist, wird die mit den Mikroorganismen und/oder Nährstoffen versetzte Suspension über das Innere des Hohlgestänges zugeführt, wobei diese Suspension dann über die Austrittsöffnungen, die u.a. an dem auf mittiger Höhe des Schneid- und Rührwerkzeugs angeordneten Mischflügel vorgesehen sind, in den kontaminierten Bereich gelangt.

Diese Anordnung ermöglicht das Ausbringen der Suspension nicht nur im Bereich der Schneid- und Rührwerkspitze, sondern auch in dessen mittlerem Bereich, so daß eine, über die Länge des Schneid- und Rührwerkzeugs gesehen, gleichmäßigere Verteilung der Suspension erzielt werden kann.

Zur Steigerung der Wirksamkeit des Aufbereitungsgerätes können im Abstand entlang des Hohlgestänges mehrere Sätze aus Schneid- und Mischflügeln in schraubenförmiger Anordnung vorgesehen sein, wobei letztere jeweils ebenfalls mit Austrittsöffnungen für die Suspension versehen sind.

Die Erfindung wird im folgenden anhand der Zeichnung näher erläutert. Es zeigen:
- Fig. 1: schematisch die erfindungsgemäße Vorrichtung zur Durchführung des Verfahrens gemäß der Erfindung;
- Fig. 2: teilweise geschnitten in Seitenansicht das Schneid- und Rührgerät zur Aufbereitung des kontaminierten Bereichs und
- Fig. 3: einen der mit Suspensionsaustrittsöffnungen versehenen Mischflügel im vertikalen Schnitt gemäß Linie III - III nach Fig. 2.

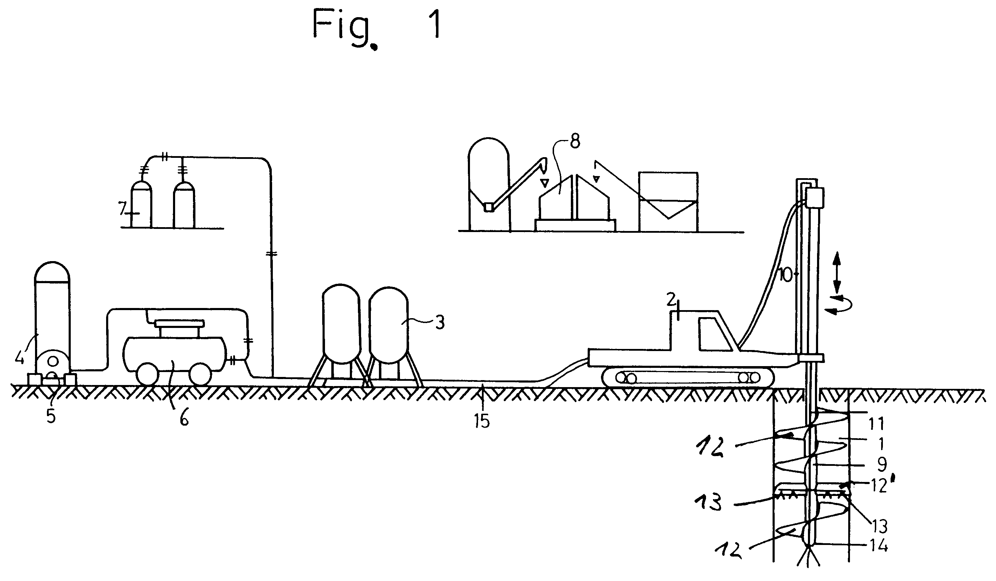

Wie aus der Zeichnung, insbesondere aus Fig. 1 ersichtlich, besteht der kontaminierte Bereich, der saniert werden soll, im dargestellten Ausführungsbeispiel aus einem natürlich gewachsenen Boden 1, der die zu beseitigenden Kontaminationen aufweist. Diese bestehen im vorliegenden Fall insbesondere aus solchen Schadstoffen, die mikrobiologisch abbaubar sind, ohne daß es erforderlich ist, den kontaminierten Boden 1 zum Zweck seiner Sanierung an eine andere Stelle zu verbringen und nach erfolgter Reinigung wieder zurückzuverbringen.

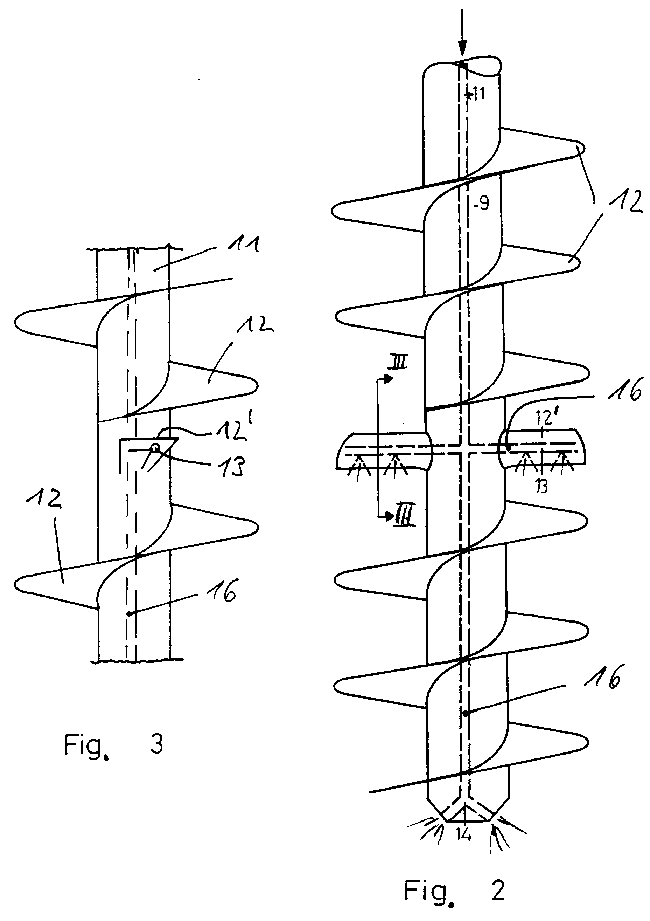

Wie dargestellt, ist ein oberirdisch angeordnetes, verfahrbares Aufbereitungsgerät 2 vorgesehen, das an einem Träger 10 ein heb- und senkbares sowie in den Boden 1 eindrehbares Schneid- und Rührgerät 9 haltert. Dieses weist an einem Hohlgestänge 11 mehrere Sätze aus kombinierten Schneid- und Mischflügeln 12 auf, die, wie aus Fig. 2 im einzelnen ersichtlich, in schraubenförmiger Anordnung entlang des Hohlgestänges 11 verlaufen.

Beim dargestellten Ausführungsbeispiel weist das Schneid- und Rührgerät 9 etwa auf mittiger Höhe seiner Längserstreckung einen speziell ausgestalteten Mischflügel in Form mehrerer, im Umfangsabstand zueinander vorgesehener Mischpaddel 12′ auf. Diese sind, wie im einzelnen aus Fig. 3 ersichtlich, unterseitig offen ausgebildet und mit Austrittsöffnungen 13 versehen. In gleicher Weise sind am unteren Ende des Hohlgestänges 11 Austrittsöffnungen 14 vorgesehen, die, genau wie die Austrittsöffnungen 13 der Mischpaddel 12′, mit einer im Hohlgestänge 11 entsprechend vorgesehenen Zulaufleitung 16 in Verbindung stehen.

Die Austrittsöffnungen 13, 14 sind zum Austrag von Suspension 3 (siehe Fig. 1) vorgesehen, die mit Mikroorganismen und/oder Nährstoffen angereichert ist und in den kontaminierten Boden eingebracht wird, nachdem dieser durch das Aufbereitungsgerät 2 bzw. das Schneid- und Rührgerät 9 derart mechanisch bearbeitet worden ist, daß er gelöst bzw. gelockert und geschnitten sowie intensiv durchmischt und damit homogen aufbereitet ist. Diese vorzugsweise oberirdisch in einem Behälter vorübergehend aufbewahrte Suspension 3 wird dem Aufbereitungsgerät 2 über Zuleitungen 15 zugeführt, von wo sie dann in der dargestellten Weise über entsprechende Leitungen und dgl. dem Schneid- und Rührgerät 9 zugeleitet wird.

Wie deutlich aus Fig. 1 ersichtlich, sind an das Aufbereitungsgerät 2 auch angeschlossen ein Behälter mit Bodenaufbereitungswasser 4, das bei Wunsch durch eine entsprechende Einrichtung 5 erwärmt werden kann, ein Behälter mit Luft 6, insbesondere Druckluft, ein Behälter mit zur Schadstoffumwandlung dienenden Chemikalien 7, insbesondere Chemikalienlösungen, und ein Behälter mit Verfestigungsmittel 8, beispielsweise auf Zementbasis, wobei sämtliche der vorgenannten Mittel wahlweise einzeln oder insgesamt auch der mit den Mikroorganismen und/oder der Nährlösung versetzten Suspension 3 zugemischt werden können.

Hinsichtlich vorstehend nicht im einzelnen erläuterter Merkmale der Erfindung wird im übrigen ausdrücklich auf die Ansprüche sowie die Zeichnung verwiesen.

## Patentansprüche

1. Verfahren zur in-situ-Sanierung kontaminierter Bereiche, wie natürliche Böden, künstliche Auffüllungen, Deponien, Altlasten und dgl., bei dem der zu sanierende Bereich (1) durch ein Aufbereitungsgerät (2) derart bearbeitet wird, daß er gelöst, gelockert, geschnitten sowie homogen durchmischt wird, und bei dem dem derart homogen aufbereiteten Bereich über dasselbe Aufbereitungsgerät (2) eine mit Mikroorganismen und/oder Nährstoffen bzw. einer Nährlösung angereicherte Suspension (3) zugeführt wird, um die im kontaminierten Bereich (1) enthaltenen Schadstoffe mikrobiologisch abzubauen, wobei die homogene Aufbereitung des kontaminierten Bereichs (1) durch mechanische Energie erfolgt, die über an dem Aufbereitungsgerät (2) vorgesehene Schneid- und Mischflügel (12) in den kontamierten Bereich (1) eingebrach wird,
**dadurch gekennzeichnet,**
daß dem kontaminierten Bereich (1) während seine mechanischen Aufbereitung Wasser (4) zur Anpassung der Temperatur und des pH-Wertes des Bereichs (1) zugegeben wird.

2. Verfahren nach Anspruch 1, dadurch gekennzeichnet, daß als zuzugebendes Wasser (4) erwärmtes Wasser verwendet wird.

3. Verfahren nach Anspruch 1 oder 2, dadurch gekennzeichnet, daß die mechanische homogene Aufbereitung des kontaminierten Bereichs (1) in dessen vertikaler und/oder horizontaler Erstreckung durchgeführt wird.

4. Verfahren nach einem der Ansprüche 1 bis 3, dadurch gekennzeichnet, daß die Suspensionszugabe in unterschiedlichen Bereichstiefen durchgeführt wird.

5. Verfahren nach einem der Ansprüche 1 bis 4, dadurch gekennzeichnet, daß der dem kontaminierten Bereich (1) über das Aufbereitungsgerät (2) zugeführten Suspension (3) Chemikalien (7) zur schadstoffumwandlung, z.B. Ozon oder Perhydrol, zugegeben werden.

6. Verfahren nach einem der Ansprüche 1 bis 5, dadurch gekennzeichnet, daß die zugegebene Suspension mit Verfestigungsmitteln (8) zur Fixierung der Kontamination versetzt wird.

7. Verfahren nach einem der Ansprüche 1 bis 6, dadurch gekennzeichnet, daß die mechanische homogene Aufbereitung des kontaminierten Bereichs (1) und die Zugabe der Suspension (3) in zeitlich aufeinanderfolgenden Arbeitsgängen durchgeführt werden.

8. Verfahren nach einem der Ansprüche 1 bis 7, dadurch gekennzeichnet, daß die mechanische Aufbereitung des kontaminierten Bereichs (1) mehrmals wiederholt wird, bevor die Suspension (3) zugegeben wird.

9. Vorrichtung zur Durchführung des Verfahrens nach einem der Ansprüche 1 bis 8, mit einem Aufbereitungsgerät (2) zum Lösen sowie homogenen Durchmischen des kontaminierten Bereichs (1) sowie zum Einbringen einer wenigstens Mikroorganismen und/oder Nährstoff enthaltenden Suspension (3) in den kontaminierten Bereich (1), wobei das Aufbereitungsgerät (2) als in den kontaminierten Bereich (1) eindrehbares, kombiniertes Schneid- und Rührgerät (9) ausgestaltet ist und einen oberirdisch angeordneten Träger (10), ein hieran gehaltertes drehbares Hohlgestänge (11) sowie ein am Außenumfang des Hohlgestänges (11) angeordnetes Schneid- und Rührwerkzeug aufweist, das mit Schneid- und Mischflügeln (12) versehen ist, an denen Austrittsöffnungen (13, 14) für eine über das Innere des Hohlgestänges (11) zuführbare Suspension (3) angeordnet sind,
**dadurch gekennzeichnet,**
daß das Schneid- und Rührwerkzeug etwa auf mittiger Höhe seiner Längserstreckung einen Mischflügel (12′) aufweist, der mit Austrittsöffnungen (13) zum Ausbringen der Suspension (3) versehen ist.

10. Vorrichtung nach Anspruch 9, dadurch gekennzeichnet, daß das Schneid- und Rührwerkzeug am unteren Ende des Hohlgestänges (11) angeordnet ist.

11. Vorrichtung nach Anspruch 9 oder 10, dadurch gekennzeichnet, daß die Schneid- und Mischflügel (12) im Abstand entlang des Hohlgestänges (11) vorgesehen sind.

12. Vorrichtung nach einem der Ansprüche 9 bis 11, dadurch gekennzeichnet, daß die Schneid- und Mischflügel (12) schraubenförmig entlang des Hohlgestänges (11) verlaufen.

## Claims

1. A method of in-situ rehabilitation of contaminated areas such as natural soil, artificial fillings, dumps, scrap-heaps and the like, the area (1) for rehabilitation being processed, i.e. dissolved, loosened, cut or homogeneously mixed, by a processing machine (2), and the resulting homogeneously processed area being supplied by the same processing machine (2) with a suspension (3) enriched with micro-organisms and/or nutrients or a nutrient solution in order microbiologically to decompose the pollutants in the contaminated area (1), the homogeneous processing of the contaminated area (1) being brought about by mechanical energy supplied to the contaminated area (1) by cutting and mixing blades (12) provided on the processing machine (2), characterised in that during the mechanical processing, water (4) is supplied to the contaminated area (1) in order to adjust its temperature and pH.

2. A method according to claim 1, characterised in that the water (4) for adding is heated.

3. A method according to claim 1 or 2, characterised in that the homogeneous mechanical processing of the contaminated area (1) is brought about in the vertical and/or horizontal direction thereof.

4. A method according to any of claims 1 to 3, characterised in that the suspension is added to the area at various levels.

5. A method according to any of claims 1 to 4, characterised in that chemicals (7), e.g. ozone or perhydrol, for converting the pollutants are added to the suspension (3) supplied to the contaminated area (1) via the processing machine (2).

6. A method according to any of claims 1 to 5, characterised in that solidifying agents (8) are added to the suspension to fix the contamination.

7. A method according to any of claims 1 to 6, characterised in that the homogeneous mechanical processing of the contaminated area (1) and the addition of suspension (3) take place in successive steps.

8. A method according to any of claims 1 to 7, characterised in that the mechanical processing of the contaminated area (1) is repeated several times before the suspension (3) is added.

9. A device for working the method according to any of claims 1 to 8, comprising a processing machine (2) for dissolving and homogeneously mixing the contaminated area (1) and for introducing a suspension (3), containing at least micro-organisms and nutrient, into the contaminated area (1), the processing machine (2) being in the form of a combined cutting and agitating device (9) for inserting into the contaminated area (1), the device also comprising an above-ground support (10), a rotatable pipe (11) secured thereto and a cutting and agitating device disposed on the outer periphery of the pipe (11) and comprising cutting and mixing blades (12) formed with outlet openings (13, 14) for a suspension (3) supplied through the interior of the pipe (11), characterised in that the cutting and agitating device, about half way along its length, has a mixing blade (12′) formed with outlet openings (13) for discharging the suspension (3).

10. A device according to claim 9, characterised in that the cutting and agitating device is disposed at the bottom end of the pipe (11).

11. A device according to claim 9 or 10, characterised in that the cutting and mixing blades (12) are spaced along the pipe (11).

12. A device according to any of claims 9 to 11, characterised in that the cutting and mixing blades (12) extend in a helix along the pipe (11).

## Revendications

1. Procédé d'assainissement in situ de zones contaminées telles des sols naturels, des remblais artificiels, des décharges, des sites contaminés ou similaires, dans lequel le sol de la zone (1) à assainir est préparé grâce à un appareil de préparation (2) de manière à le défaire, l'ameublir, le couper et le mélanger pour le rendre homogène, et dans lequel on introduit dans la zone préparée homogène, par l'intermédiaire du même appareil de préparation (2), une suspension (3) enrichie par des micro-organismes et/ou des substances nutritives ou une solution nutritive pour dégrader par voie microbiologique les substances polluantes contenues dans la zone (1) contaminée, la préparation homogène de la zone (1) contaminée étant effectuée par énergie mécanique qui est appliquée dans la zone (1) contaminée par l'intermédiaire de pales (12) de coupe et de malaxage prévues sur l'appareil de préparation (2), caractérisé en ce qu'on ajoute à la zone (1) contaminée pendant sa préparation mécanique, de l'eau (4) pour l'adapter à la température et à la valeur du pH de la zone (1).

2. Procédé selon la revendication 1, caractérisé en ce qu'on utilise de l'eau (4) réchauffée en tant qu'eau d'addition.

3. Procédé selon la revendication 1 ou 2, caractérisé en ce que la préparation mécanique homogène de la zone (1) contaminée est effectuée dans son étendue verticale et/ou horizontale.

4. Procédé selon l'une quelconque des revendications 1 à 3, caractérisé en ce que l'adjonction de suspension est effectuée à différentes profondeurs de la zone.

5. Procédé selon l'une quelconque des revendications 1 à 4, caractérisé en ce qu'on ajoute à la suspension (3), qui est introduite dans zone (1) contaminée par l'intermédiaire de l'appareil de préparation (2), des produits chimiques (7), par exemple de l'ozone ou de l'eau oxygénée, pour transformer les substances polluantes.

6. Procédé selon l'une quelconque des revendications 1 à 5, caractérisé en ce que la suspension ajoutée est mélangée à un agent de solidification (8) pour fixer les contaminants.

7. Procédé selon l'une quelconque des revendications 1 à 6, caractérisé en ce que la préparation mécanique homogène de la zone (1) contaminée et l'adjonction de la suspension (3) sont effectuées dans des opérations successives dans le temps.

8. Procédé selon l'une quelconque des revendications 1 à 7, caractérisé en ce que la préparation mécanique de la zone (1) contaminée est répétée à plusieurs reprises avant d'ajouter la suspension (3).

9. Dispositif de mise en oeuvre du procédé selon l'une quelconque des revendications 1 à 8, comportant un appareil de préparation (2) pour ameublir ainsi que mélanger de manière homogène la zone (1) contaminée ainsi que pour introduire dans la zone (1) contaminée une suspension (3) contenant au moins des micro-organismes et/ou des substances nutritives, l'appareil de préparation (2) étant réalisé sous la forme d'un outil combiné de coupe et de malaxage (9), qui peut être introduit en rotation dans la zone (1) contaminée, ledit appareil de préparation présentant un support (10) agencé en surface, un arbre creux (11) maintenu en rotation sur ledit support ainsi qu'un outil de coupe et de malaxage agencé sur la périphérie extérieure de l'arbre creux (11), ledit outil étant pourvu de pales de coupe et de malaxage (12) sur lesquelles sont ménagés des orifices de sortie (13, 14) pour une suspension (3) qui peut être amenée via l'intérieur de l'arbre creux (11), caractérisé en ce que l'outil de coupe et de malaxage présente approximativement à mi-hauteur de son étendue longitudinale une pale de malaxage (12′) qui est pourvue d'orifices de sortie (13) pour débiter la suspension (3).

10. Dispositif selon la revendication 9, caractérisé en ce que l'outil de coupe et de malaxage est agencé à l'extrémité inférieure de l'arbre creux (11).

11. Dispositif selon la revendication 9 ou 10, caractérisé en ce que les pales de coupe et de malaxage (12) sont prévues à distance les unes des autres le long de l'arbre creux (11).

12. Dispositif selon l'une des revendications 9 à 11, caractérisé en ce que les pales de coupe et de malaxage (12) s'étendent sous une forme hélicoïdale le long de l'arbre creux (11).
